# FASCICULE DE BREVET EUROPEEN

(11) **EP 1 193 994 B1**
(45) Date de publication et mention de la délivrance du brevet: **25.04.2007**
(21) Numéro de dépôt: 01460055.5
(22) Date de dépôt: 27.09.2001
(51) Int. Cl.: H04Q 7/38

(54) **Procédé et dispositif de calcul de la position d'une station mobile, programme informatique et support mémoire correspondants**
Verfahren und Gerät zur Positionsberechnung eines mobilen Engerätes sowie entsprechendes Informatikprogramm und entsprechende Speicherunterstützung
Method and device for the position calculation of a mobile terminal, and corresponding information program and memory support

(30) Priorité: 29.09.2000 FR 0012485
(43) Date de publication de la demande: 03.04.2002
(73) Titulaire: Société Française du Radiotéléphone-SFR, 75008 Paris (FR)
(72) Inventeur: Remy, Gabriel M., F-94170 Le Perreux (FR)
(74) Mandataire: Vidon, Patrice

(56) Documents cités:
- EP-A- 0 923 256
- US-A- 5 508 707
- US-A- 5 602 903
- US-A- 5 930 717

## Description

Le domaine de l'invention est celui des systèmes de radiocommunication avec des mobiles, notamment, mais non exclusivement, selon le standard UMTS (pour "Universal Mobile Telecommunication System - 2 GHz"), GSM 900 (pour "Global System for Mobile- 900 MHz"), DCS 1800 (pour "Digital Cellular System - 1800 MHz") ou encore PCS 1900 (pour "Personal Communication System - 1900 MHz").

Plus précisément, la présente invention concerne un procédé et un dispositif de calcul de la position d'une station mobile appartenant à un système de radiocommunication cellulaire, à partir d'un identifiant d'une cellule géographique courante dans laquelle se trouve cette station mobile.

Par "cellule géographique courante", on entend la cellule dans laquelle se trouve la station mobile à l'instant considéré. On rappelle que les stations mobiles évoluent au sein d'un réseau de cellules géographiques. Chaque cellule est associée à une station de base permettant aux stations mobiles se trouvant dans cette cellule d'émettre et de recevoir des appels.

Dans la suite de la description, on utilise indifféremment les termes "station mobile", "radiotéléphone" et "mobile".

De façon classique, les informations de localisation des mobiles sont associées à des informations de signalisation relatives notamment aux identités de ces mêmes mobiles, de façon à permettre la fourniture de services géo-dépendants (c'est-à-dire liés à la localisation des mobiles). Les services géo-dépendants visent par exemple à gérer une flotte de véhicules ou à fournir des informations dépendant de la localisation (par exemple la météo locale, le téléchargement de cartes géographiques, l'indication du plus proche restaurant, hôtel, garage, etc), avec éventuellement l'acheminement de l'appel en conséquence (par modification du numéro demandé).

Typiquement, les informations associées de localisation et d'identification des différentes stations mobiles alimentent une base de données de localisation que consultent les fournisseurs de services géo-dépendants pour répondre aux requêtes de leurs clients. Typiquement, cette base de données de localisation est hébergée sur un serveur de localisation.

Dans la suite de la description, on suppose que l'on dispose d'une information de localisation "brute", sous la forme de l'identifiant (par exemple le BSCI, selon la terminologie GSM) de la cellule courante dans laquelle se trouve le mobile. Typiquement, ceci revient à considérer que la localisation est effectuée par le sous-système réseau (NSS selon la terminologie GSM), qui détermine la cellule courante à partir d'une information de cellule contenue dans un message de signalisation (ou un message court) émis par le mobile.

En conséquence, on ne discute pas ici des autres techniques dites "de localisation radiofréquence", telles que le GPS ("Global Positioning System"), l'OTD ("Observed Time Distance"), l'E-OTD ("Enhanced Observed Time Difference"), le TDOA ("Time Difference of Arrival"), le TA ("Timing Advance"), l'AOA ("Angle of Arrival"), ...

La technique actuelle d'utilisation de l'identifiant de cellule en tant qu'information de localisation consiste à utiliser uniquement la position géographique de la station de base associée à la cellule courante. On dispose à cet effet d'une table de correspondance fixe, associant à chaque identifiant de cellule une position géographique de station de base.

Un avantage de la technique actuelle est que la position de la station de base est un immeuble parfaitement localisé au cadastre. Un autre avantage de la technique actuelle est de pouvoir être utilisée par un opérateur qui ne possède pas la connaissance complète de l'outil de prédiction radio des cellules géographiques du réseau de radiocommunication (du fait qu'il a acheté un outil standard du commerce).

Cette technique actuelle présente cependant plusieurs inconvénients.

Tout d'abord, elle n'est pas suffisamment précise car la position géographique de la station de base ne correspond que très rarement au centre de la cellule géographique associée. En effet, la plupart des stations de base sont tri-sectorisées. Chaque station de base est commune à trois cellules géographiques d'ouverture angulaire égale à environ 120° chacune. On comprend que, dans ce cas, aucune des trois cellules n'est centrée sur la position géographique de la station de base commune.

Un autre inconvénient de la technique actuelle est qu'elle ne tient pas compte de l'incertitude sur la position supposée du mobile. En effet, c'est toujours la position de la station de base qui est utilisée. Or, le mobile peut se trouver n'importe où dans la cellule et certaines cellules sont plus grandes que d'autres.

Par ailleurs, la technique actuelle précitée étant basée sur une table de correspondance fixe, elle ne permet pas de suivre aisément les évolutions du réseau de cellules géographiques. Une autre technique est décrite dans le document EP 0923256 (MANESMANN AG) 16-06-1999.

L'invention a notamment pour objectif de pallier ces différents inconvénients de l'état de la technique.

Plus précisément, l'un des objectifs de la présente invention est de fournir une technique (procédé et dispositif) de calcul de la position d'une station mobile à partir d'un identifiant de cellule courante, cette technique étant plus précise que la technique actuelle présentée ci-dessus.

L'invention a également pour objectif de fournir une telle technique de calcul permettant de tenir compte de l'incertitude sur la position supposée du mobile.

Un autre objectif de l'invention est de fournir une telle technique de calcul qui s'adapte aisément à toute évolution du réseau de cellules géographiques.

Ces différents objectifs, ainsi que d'autres qui apparaîtront par la suite, sont atteints selon l'invention à l'aide d'un procédé de calcul comprenant les étapes suivantes:
- calcul d'une représentation géographique modélisée de la cellule courante ;
- calcul du barycentre de ladite représentation géographique modélisée de la cellule courante ;
- calcul d'une zone d'incertitude, possédant une forme géométrique prédéterminée, centrée sur ledit barycentre et dont la surface est sensiblement égale à la surface de ladite représentation géographique modélisée de la cellule courante.

La position de la station mobile est définie par ledit barycentre, avec une incertitude égale à ladite zone d'incertitude.

Le principe général de l'invention consiste donc à calculer une représentation barycentrique (barycentre et forme géométrique centrée sur ce barycentre) de la cellule courante, à partir d'une représentation géographique modélisée de cette cellule courante.

Ce calcul, indépendant de la position de la station de base, est beaucoup plus précis que celui de la technique actuelle précitée. On notera que plus la cellule courante est petite, plus la zone d'incertitude sur la position du mobile est faible.

Préférentiellement, ledit calcul d'une représentation géographique modélisée de la cellule courante consiste à calculer, avec un outil de prédiction radio, un ensemble de points où la cellule courante présente un champ radiofréquence supérieur aux autres cellules.

De cette façon, la représentation géographique modélisée de la cellule courante est proche de la réalité, et le calcul de la position du mobile et de l'incertitude associée est précis. L'opérateur du système de radiocommunication dispose généralement déjà d'un tel outil de prédiction radio, qui lui permet d'assurer au mieux la gestion et la maintenance de son réseau. Avantageusement, on utilise donc cet outil de prédiction radio existant pour calculer la représentation géographique modélisée de la cellule courante.

De façon préférentielle, le ladite forme géométrique appartient au groupe comprenant des disques et des polygones (préférentiellement des hexagones, des carrés et des triangles équilatéraux). Ces formes géométriques permettent de simplifier les calculs. Il est clair cependant que d'autres formes géométriques peuvent être envisagées sans sortir du cadre de la présente invention.

Dans un mode de réalisation particulier, ladite forme géométrique est un polygone, et ledit polygone est orienté selon la plus grande direction de la cellule courante. Ainsi, on optimise le calcul de la zone d'incertitude.

Dans un mode de réalisation particulier de l'invention, le calcul de la position de la station mobile est effectué de façon dynamique. De cette façon, la présente invention permet de s'adapter aisément à toute évolution du réseau de cellules géographiques.

Avantageusement, ledit procédé comprend une étape préalable d'extraction de l'identifiant de la cellule courante d'au moins un message de signalisation circulant sur le réseau du système de radiocommunication.

Dans un mode de réalisation particulier, ladite extraction est déclenchée si au moins une des conditions suivantes est remplie lorsque la station mobile lance un appel :
- le numéro de la station mobile appartient à une liste prédéterminée de numéros appelants ;
- le numéro appelé par la station mobile appartient à une liste prédéterminée de numéros appelés ;
- la cellule courante appartient à une liste prédéterminée de cellules.

Selon une application avantageuse, la position de la station mobile, et l'incertitude associée, alimentent une base de données de localisation, afin de permettre la fourniture d'au moins un service géo-dépendant.

Cette base de données de localisation peut être interrogée par un unique fournisseur de service(s) géo-dépendant(s) ou bien partagée par une pluralité de fournisseurs de services géo-dépendants. Elle est par exemple gérée par l'opérateur du système de radiocommunication.

Pour chaque mobile localisé, la base de données de localisation stocke :
- un identifiant du mobile (IMSI ou TMSI par exemple),
- la position du mobile avec l'incertitude sur cette position, résultant du calcul barycentrique selon l'invention ;
- d'éventuelles autres informations de signalisation, relatives par exemple au type de communication demandées, au numéro demandé, ...

L'invention concerne également un dispositif de calcul de la position d'une station mobile appartenant à un système de radiocommunication cellulaire, à partir d'un identifiant d'une cellule géographique courante dans laquelle se trouve ladite station mobile. Selon l'invention, le dispositif comprend :
- des moyens de calcul d'une représentation géographique modélisée de la cellule courante ;
- des moyens de calcul du barycentre de ladite représentation géographique modélisée de la cellule courante ;
- des moyens de calcul d'une zone d'incertitude, possédant une forme géométrique prédéterminée, centrée sur ledit barycentre et dont la surface est sensiblement égale à la surface de ladite représentation géographique modélisée de la cellule courante ;
la position de la station mobile étant définie par ledit barycentre, avec une incertitude égale à ladite zone d'incertitude.

Préférentiellement, ledit dispositif est intégré à un outil de planification radiofréquence des cellules géographiques dudit système de radiocommunication cellulaire.

De cette façon, on limite les coûts en utilisant un équipement dont dispose déjà l'opérateur.

L'invention concerne aussi un programme informatique comprenant des séquences d'instructions adaptées à la mise en oeuvre d'un procédé de calcul de la position d'une station mobile selon l'invention.

L'invention concerne également un support mémoire apte à être lu par un ordinateur et contenant un programme qui, lorsqu'il est exécuté par l'ordinateur, rend l'ordinateur capable de mettre en oeuvre le procédé de calcul de la position d'une station mobile selon l'invention.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique illustrant un système de radiocommunication dans lequel est mis en oeuvre un mode de réalisation particulier du procédé selon l'invention de calcul de la position d'un mobile ;
- les figures 2 à 5 illustrent chacune un mode de réalisation particulier de la forme géométrique (disque, carré, hexagone et triangle respectivement) de la zone d'incertitude calculée par le procédé selon l'invention ;
- la figure 6 présente un organigramme simplifié d'un mode de réalisation particulier du procédé selon l'invention de calcul de la position d'un mobile ; et
- la figure 7 présente un schéma bloc d'un mode de réalisation particulier du dispositif de calcul de position selon la présente invention, apparaissant sur la figure 1.

L'invention concerne donc un procédé et un dispositif de calcul de la position d'un mobile à partir d'un identifiant de la cellule géographique dans laquelle se trouve ce mobile (appelée "cellule courante" dans la suite de la description).

Dans la suite de la description, on considère un système de radiocommunication cellulaire selon la norme GSM. Il est clair cependant que l'invention n'est pas limitée à ce type de système.

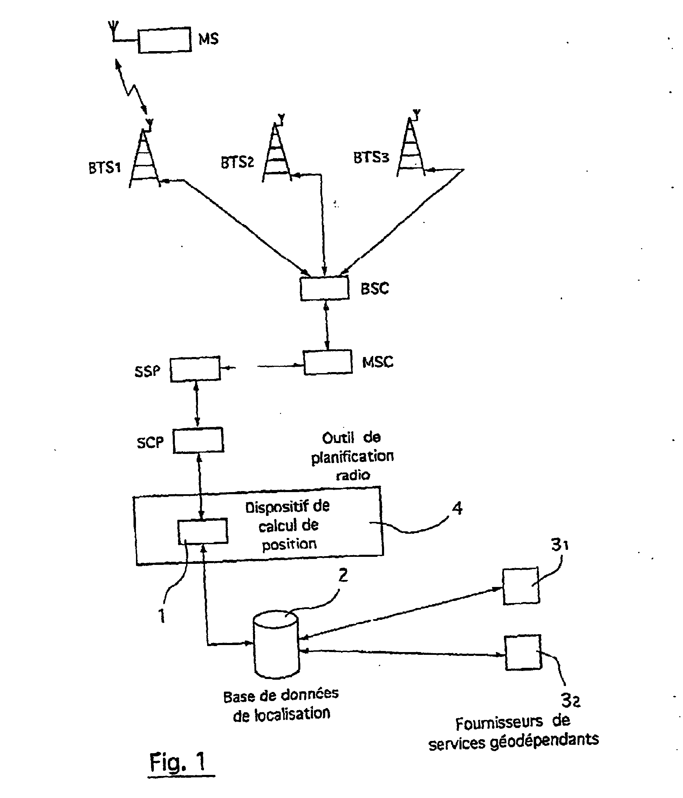

On rappelle que, de façon classique, un réseau cellulaire GSM comprend au moins un commutateur de services mobiles (MSC selon la terminologie GSM) permettant l'interconnexion du réseau cellulaire avec un réseau téléphonique fixe (par exemple, le Réseau Téléphonique Commuté Public). Au moins un contrôleur de station de base (BSC, selon la terminologie GSM) est relié à chaque MSC. Au moins une station de base (BTS selon la terminologie GSM) est reliée à chaque BSC. Chaque BTS assure la couverture d'une zone géographique distincte, appelée "cellule", dans laquelle peuvent se déplacer des mobiles (MS selon la terminologie GSM). Une partie d'un tel réseau GSM est illustrée sur la figure 1, sur laquelle sont schématisés un MSC, un BSC, trois stations de base BTS₁ à BTS₃ et un mobile MS. A l'instant considéré, on suppose que la cellule courante du mobile MS est celle associée à la station de base référencée BTS₁.

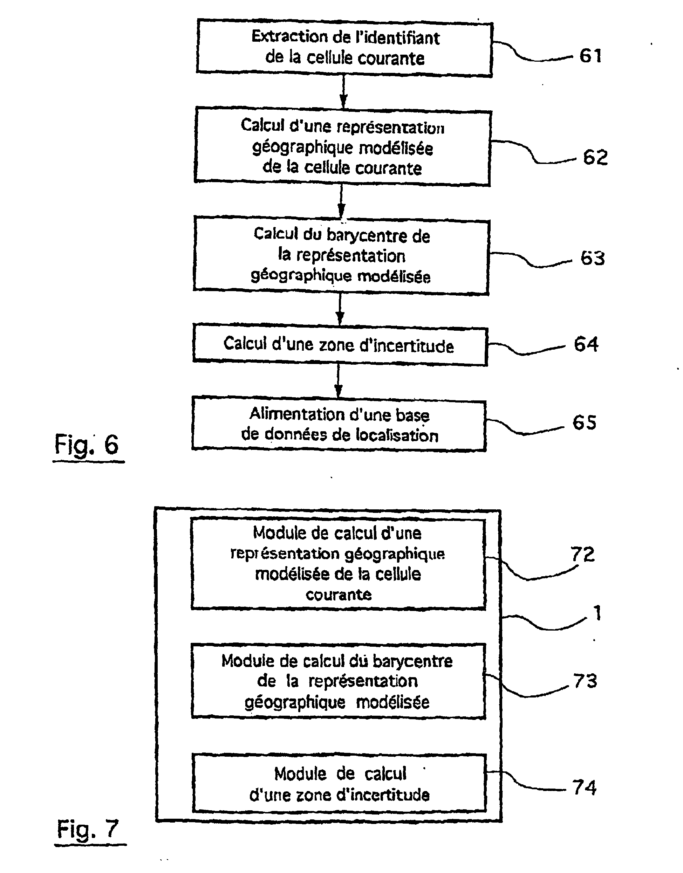

Dans le mode de réalisation particulier illustré par l'organigramme simplifié de la figure 6, le procédé selon l'invention comprend les étapes suivantes :
- extraction (61) de l'identifiant de la cellule courante contenu dans un message de signalisation ;
- calcul (62) d'une représentation géographique modélisée de la cellule courante ;
- calcul (63) du barycentre de la représentation géographique modélisée, ce barycentre étant la position calculée du mobile ;
- calcul (64) d'une zone d'incertitude, définissant l'incertitude sur la position calculée du mobile ;
- alimentation (65) d'une base de données de localisation, avec la position de la station mobile, et l'incertitude associée.

On présente maintenant de façon détaillée chacune de ces étapes 61 à 65.

### Etape 61 : extraction de l'identifiant de la cellule courante contenu dans un message de signalisation

Lorsque le mobile lance un appel, en mode téléphonie (appel sortant circuit) ou en mode paquet (appel sortant GPRS, UMTS ou encore SMS), la signalisation circulant sur le sous-système réseau (NSS) véhicule le numéro de l'appelant, le numéro appelé et l'identifiant de la cellule d'origine de l'appel (cellule courante). Ces informations sont notamment présentes dans le message initial d'adresse (MIF/IAM en signalisation CCITT n° 7) qui transite par le MSC.

Comme illustré sur la figure 1, afin de disposer de ces informations, on met par exemple en oeuvre le mécanisme suivant de capture et d'extraction, grâce au concept de réseau intelligent (IN):
- un SSP (Point de commutation des services, aussi appelé "trigger point"), relié (ou intégré) au MSC, scrute le MIF de chaque nouvel appel, et quand il détecte qu'une condition de déclenchement est vérifiée, il transmet ce MIF au Point de contrôle des services (SCP) ;
- le SCP extrait l'identifiant de la cellule courante (et éventuellement le numéro appelé et l'identifiant du mobile appelant) du MIF que le SSP lui fournit, puis envoie les informations extraites vers un dispositif de calcul de localisation 1.

Le mécanisme de capture et d'extraction décrit ci-dessus s'applique essentiellement à un appel en mode téléphonie (appel sortant circuit). Il peut toutefois aisément être transposé au traitement d'un appel en mode paquet (appel sortant GPRS, UMTS ou encore SMS), sans sortir du cadre de la présente invention.

La condition de déclenchement est par exemple choisie par l'opérateur du réseau. Eventuellement, plusieurs conditions peuvent être combinées. A titre d'exemple, on peut citer les conditions suivantes :
- le numéro appelant appartient à une liste prédéterminée de numéros appelants. Par exemple, certains abonnés peuvent avoir souscrit un service de localisation systématique, éventuellement implicite ;
- le numéro appelé appartient à une liste prédéterminée de numéros appelés. On détecte par exemple des appels vers des serveurs particuliers. Ce sont par exemple les serveurs de fournisseurs de services géo-dépendants 3₁, 3₂ ;
- la cellule courante appartient à une liste prédéterminée de cellules.

### Etape 62 : calcul de la représentation géographique modélisée de la cellule courante

Le calcul de la représentation géographique modélisée de la cellule courante consiste à calculer, avec un outil de prédiction radio, un ensemble de points géographiques où la cellule courante présente un champ radiofréquence supérieur aux autres cellules (notion de "best server"). En d'autres termes, le mobile se cale sur cette cellule (c'est-à-dire communique via la station de base associée à cette cellule) uniquement en ces points géographiques. Ailleurs, par transfert de communication ("handover") ou resélection, le mobile passe sur d'autres cellules.

Le dessin de l'aire d'une cellule géographique est par exemple calculé de façon dynamique par un outil de planification RF (radiofréquence) dont dispose l'opérateur à des fins de gestion et de maintenance de son réseau. Cet outil est parfois également appelé "outil de prédiction radio du réseau cellulaire".

L'outil de prédiction radio est un logiciel qui calcule, à partir des données de la station de base, le champ électrique produit en tout point géographique. La station de base est caractérisée à cet effet par le diagramme de l'antenne (X, Y, Z) décrivant le gain en dB applicable sur chacune des directions partant de la station de base, et par la puissance alimentant l'antenne à la fréquence RF considérée.

Les algorithmes de calcul appliqués comprennent deux familles :
- méthodes "heuristiques" : le champ électrique est obtenu par une addition logarithmique (en dB) de différents affaiblissements de parcours tenant compte du relief et de la nature des sols sur le trajet. La plus connue est la formule d'Okumura-Hata ;
- méthodes "lancer de rayon" ou assimilées : l'algorithme tente de reconstruire les trajets de l'onde radioélectrique pour en déduire l'affaiblissement de parcours (exemple : Walfish-Ikegomi).

Ces calculs donnent des valeurs approximatives (de l'ordre de 6 dB d'erreur tolérée).

Le "pixel" (élément de base) de calcul est un carré, par exemple de 50 m x 50 m. Plus le carré est petit, plus le calcul est précis et compliqué.

Disposant de la valeur du champ reçu de différentes stations de base en un point donné, le calcul du "best server" consiste à comparer ces données et à désigner la cellule qui produit le champ électrique le plus élevé.

Le lieu géométrique des points où une cellule produit un champ supérieur à toutes les autres est l'aire dans laquelle cette cellule est "best server". Cette aire varie :
- avec la topologie du réseau cellulaire (adjonction de nouvelles cellules),
- avec les paramètres caractéristiques de la cellule au niveau de la station de base (puissance d'entrée de l'antenne, type d'antenne, valeur du "tilt", orientation de l'antenne, etc).

### Etape 63 : calcul du barycentre de la représentation géographique modélisée

Le calcul du barycentre de la représentation géographique modélisée est effectué avec l'ensemble des points géographiques constitutifs de cette dernière. Ce calcul repose sur un algorithme mathématique classique, qui ne sera donc pas décrit plus en détail.

### Etape 64 : calcul de la zone d'incertitude

La zone d'incertitude est calculée de façon à posséder une forme géométrique prédéterminée, à être centrée sur le barycentre (calculé lors de l'étape référencée 53) et à avoir une surface est sensiblement égale à la surface de la représentation géographique modélisée de la cellule courante (calculée lors de l'étape référencée 62).

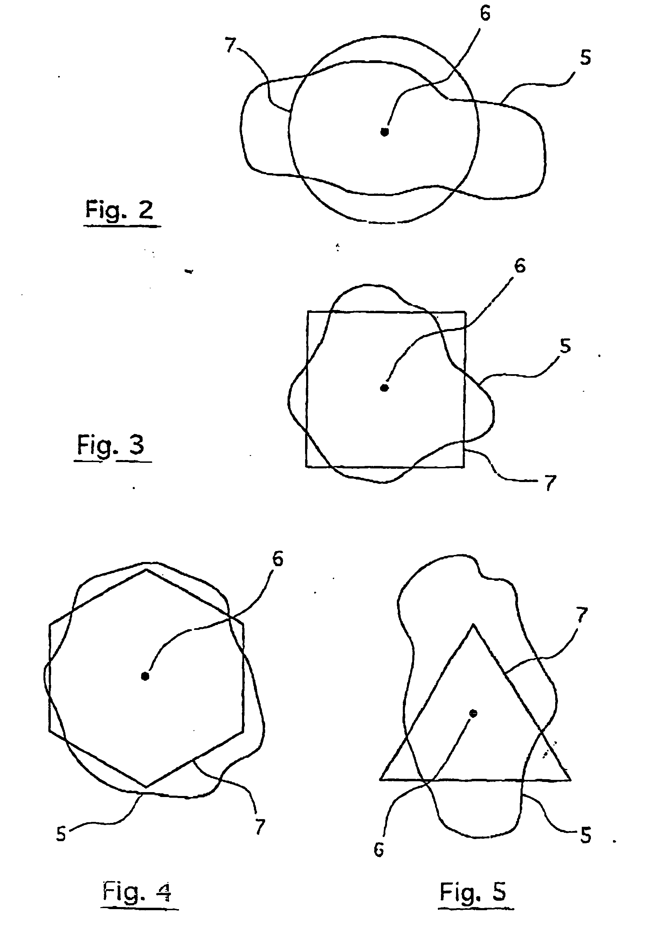

Plusieurs formes géométriques peuvent être envisagées pour la zone d'incertitude, à savoir notamment, mais non exclusivement, un disque (fig.2), un carré (fig.3), un hexagone (fig.4) ou encore un triangle (préférentiellement équilatéral) (fig.5). Sur les figures 2 à 5, la représentation géographique modélisée de la cellule courante est référencée 5, le barycentre de cette représentation géographique est référencé 6, et la zone d'incertitude est référencée 7.

D'une façon générale, si la forme géométrique est un polygone, ce dernier est orienté selon la plus grande direction de la cellule courante. Le processus d'orientation consiste par exemple à balayer l'aire de la représentation géographique modélisée (aire "best server") par une droite passant par le barycentre et prenant successivement toutes les orientations possibles (par exemple du Nord vers l'Est puis le Sud, l'Ouest et à nouveau le Nord). Ensuite, on mesure les segments interceptés entre le barycentre et le point le plus éloigné. Enfin, on oriente la "pointe" (ou l'une des "pointes") du polygone dans la direction dans laquelle on a mesuré le plus grand segment intercepté. En d'autres termes, on aligne le plus grand segment intercepté avec la diagonale du carré, ou avec la hauteur du triangle équilatéral, ou encore avec le "diamètre" de l'hexagone.

La présente invention est particulièrement intéressante lorsque les étapes de calcul du barycentre et de la zone d'incertitude, référencées 62 et 63, sont effectuées de façon dynamique.

Dans l'exemple décrit ci-dessus, les étapes référencées 62 à 64 sont mises en oeuvre par un dispositif de calcul de localisation 1, qui comprend des modules de calcul adaptés (référencés 72 à 74 respectivement, sur la figure 7). Ces modules de calcul constituent par exemple un programme informatique exécuté par un ordinateur. De façon classique, ce programme informatique peut être stocké sur un support mémoire (disquette, disque dur, CD-ROM, DVD, ...) pouvant être lu par l'ordinateur.

Ce dispositif 1 est par exemple intégré à un outil 4 (fig.1) de gestion et de maintenance du réseau cellulaire dont dispose déjà l'opérateur du système de radiocommunication, à savoir l'outil précité de planification radiofréquence des cellules géographiques.

### Etape 65 : alimentation d'une base de données de localisation

La position du mobile et l'incertitude sur cette position, qui résultent du calcul barycentrique selon l'invention, sont stockées dans une base de données de localisation 2 (aussi appelé serveur de localisation).

Pour chaque mobile, la base de données de localisation associe d'autres informations à ces informations de position et d'incertitude, telles que par exemple :
- une information d'horodatage ;
- un identifiant du mobile, tel que par exemple l'IMSI ("International Mobile Subscriber Identity"), le TMSI ("Temporary Mobile Subscriber Identity") ;
- la nature de la mesure, à savoir "capture réseau dans le cas présent. Dans le cas où la base de données de localisation stocke aussi des informations de position obtenues selon d'autres techniques (GPS, goniométrie, EOTD, ...);
- le type de message de signalisation (par exemple le MIF) dont a été extraite l'information de localisation brute (c'est-à-dire l'identifiant de cellule courante, dans la cas présent);
- le numéro demandé ;
- etc.

Cette base de données de localisation est par exemple mise à jour de façon périodique ou selon toute autre stratégie. Optionnellement, elle conserve des informations relatives à plusieurs mesures successives d'un même mobile, sur une durée relativement longue (au moins une heure). Grâce à une application particulière associant ces mesures successives, on peut par exemple déterminer le sens du déplacement du mobile, ou lever une indétermination entre deux routes proches.

Elle est par exemple consultée, en fonction de certaines modalités, par des fournisseurs de services géo-dépendants 3₁, 3₂, désirant obtenir des informations leur permettant de répondre aux requêtes de leurs clients.

Il est clair que de nombreux autres modes de réalisation de l'invention peuvent être envisagés sans sortir du cadre de la présente invention.

## Revendications

1. Procédé de calcul de la position d'une station mobile (MS) appartenant à un système de radiocommunication cellulaire, à partir d'un identifiant d'une cellule géographique courante dans laquelle se trouve ladite station mobile,
**caractérisé en ce qu**'il comprend les étapes suivantes :
- calcul d'une représentation géographique modélisée (5) de la cellule courante ;
- calcul du barycentre (6) de ladite représentation géographique modélisée de la cellule courante ;
- calcul d'une zone d'incertitude (7), possédant une forme géométrique prédéterminée, centrée sur ledit barycentre et dont la surface est sensiblement égale à la surface de ladite représentation géographique modélisée de la cellule courante ;
et en ce que la position de la station mobile est définie par ledit barycentre, avec une incertitude égale à ladite zone d'incertitude.

2. Procédé selon la revendication 1, **caractérisé en ce que** ledit calcul d'une représentation géographique modélisée (5) de la cellule courante consiste à calculer, avec un outil de prédiction radio, un ensemble de points où la cellule courante présente u n champ radiofréquence supérieur aux autres cellules.

3. Procédé selon l'une quelconque des revendications 1 et 2, **caractérisé en ce que** le ladite forme géométrique appartient au groupe comprenant :
- des disques ;
- des polygones, préférentiellement des hexagones, des carrés et des triangles équilatéraux.

4. Procédé selon l'une quelconque des revendications 1 et 2, **caractérisé en ce que** ladite forme géométrique est un polygone,
et **en ce que** ledit polygone est orienté selon la plus grande direction de la cellule courante.

5. Procédé selon l'une quelconque des revendications 1 à 4, **caractérisé en ce que** le calcul de la position de la station mobile est effectué de façon dynamique.

6. Procédé selon l'une quelconque des revendications 1 à 5 **caractérisé en ce qu**'il comprend une étape préalable d'extraction de l'identifiant de la cellule courante d'au moins un message de signalisation circulant sur le réseau du système de radiocommunication.

7. Procédé selon la revendication 6, **caractérisé en ce que** ladite extraction est déclenchée si au moins une des conditions suivantes est remplie lorsque la station mobile lance un appel :
- le numéro de la station mobile appartient à une liste prédéterminée de numéros appelants ;
- le numéro appelé par la station mobile appartient à une liste prédéterminée de numéros appelés ;
- la cellule courante appartient à une liste prédéterminée de cellules.

8. Procédé selon l'une quelconque des revendications 1 à 7, **caractérisé en ce que** la position de la station mobile, et l'incertitude associée, alimentent une base de données de localisation (2), afin de permettre la fourniture d'au moins un service géo-dépendant.

9. Dispositif (1) de calcul de la position d'une station mobile appartenant à un système de radiocommunication cellulaire, à partir d'un identifiant d'une cellule géographique courante dans laquelle se trouve ladite station mobile,
**caractérisé en ce qu'**il comprend :
- des moyens de calcul d'une représentation géographique modélisée (5) de la cellule courante ;
- des moyens de calcul du barycentre (6) de ladite représentation géographique modélisée de la cellule courante ;
- des moyens de calcul d'une zone d'incertitude (7), possédant une forme géométrique prédéterminée, centrée sur ledit barycentre et dont la surface est sensiblement égale à la surface de ladite représentation géographique modélisée de la cellule courante ;
la position de la station mobile étant définie par ledit barycentre, avec une incertitude égale à ladite zone d'incertitude.

10. Dispositif selon la revendication 9, **caractérisé en ce qu**'il est intégré à un outil (4) de planification radiofréquence des cellules géographiques dudit système de radiocommunication cellulaire.

11. Programme d'ordinateur comprenant des portions/moyens/instructions de code de programme pour l'exécution des étapes du procédé selon l'une des revendications 1 à 8, lorsque ledit programme est exécuté sur un ordinateur.

12. Produit programme d'ordinateur destiné au calcul de la position d'une station mobile (MS) appartenant à un système de radiocommunication cellulaire, à partir d'un identifiant d'une cellule géographique courante dans laquelle se trouve ladite station mobile, ledit produit programme d'ordinateur comprenant des portions/moyens/instructions de code de programme enregistré sur un support utilisable dans un ordinateur, comprenant :
- des moyens de programmation lisibles par ordinateur pour effectuer l'étape de calcul d'une représentation géographique modélisée (5) de la cellule courante ;
- des moyens de programmation lisibles par ordinateur pour effectuer l'étape de calcul du barycentre (6) de ladite représentation géographique modélisée de la cellule courante ;
- des moyens de programmation lisibles par ordinateur pour effectuer l'étape de calcul d'une zone d'incertitude (7), possédant une forme géométrique prédéterminée, centrée sur ledit barycentre et dont la surface est sensiblement égale à la surface de ladite représentation géographique modélisée de la cellule courante ;
la position de la station mobile étant définie par le barycentre, avec une incertitude égale à la zone d'incertitude.

## Claims

1. Process for calculating the position of a mobile station (MS) belonging to a cellular radiocommunication system, starting from an identifier of a current geographic cell in which the said mobile station is located,
**characterized in that** it includes the following steps:
- calculate a modelled geographic representation (5) of the current cell;
- calculate the barycentre (6) of the said modelled geographic representation of the current cell;
- calculate an uncertainty area (7), with a predetermined geometric shape, centred on the said barycentre and the area of which is approximately equal to the area of the said modelled geographic representation of the current cell;
and **in that** the position of the mobile station is defined by the said barycentre, with an uncertainty equal to the said uncertainty area.

2. Process according to claim 1, **characterised in that** the said calculation of a modelled geographic representation (5) of the current cell consists of using a radio prediction tool to calculate a set of points in which the radio frequency field in the current cell is stronger than that in other cells.

3. Process according to either of claims 1 or 2, **characterised in that** the said geometric shape belongs to the group comprising;
- disks;
- polygons, preferably hexagons, squares and equilateral triangles..

4. Process according to either of claims 1 or 2, **characterised in that** the said geometric shape is a polygon
and **in that** the said polygon is oriented along the largest direction of the current cell.

5. Process according to any one of claims 1 to 4, **characterised in that** the position of the mobile station is calculated dynamically.

6. Process according to any one of claims 1 to 5, **characterised in that** it comprises a prior step to extract the identifier of the current cell from at least one signal message circulating on the radiocommunication system network.

7. Process according to claim 6, **characterised in that** the said extraction is triggered if at least one of the following conditions is satisfied when the mobile station makes a call:
- the number of the mobile station belongs to a predetermined list of calling numbers;
- the number called by the mobile station belongs to a predetermined list of called numbers;
- the current cell belongs to a predetermined list of cells.

8. Process according to any one of claims 1 to 7, **characterised in that** the position of the mobile station and the associated uncertainty are input into a positioning database (2) so that at least one geodependent service can be provided.

9. Device (1) for calculating the position of a mobile station belonging to a cellular radiocommunication system starting from the identifier of a current geographic cell in which the said mobile station is located,
**characterized in that** it comprises:
- means of calculating a modelled geographic representation (5) of the current cell;
- means of calculating the barycentre (6) of the said modelled geographic representation of the current cell;
- means of calculating an uncertainty area (7), with a predetermined geometric shape centred on the said barycentre and the area of which is approximately equal to the area of the said modelled geographic representation of the current cell; the position of the mobile station being defined by the said barycentre with an uncertainty equal to the said uncertainty area.

10. Process according to claim 9, **characterised in that** it is integrated into a radio frequency planning tool (4) for the geographic cells in the said cellular radiocommunication system.

11. Computer program comprising portions / means / program code instructions for execution of the steps in the process according to any one of claims 1 to 8 when the said program is executed on a computer.

12. Computer program intended for calculating the position of a mobile station (MS) belonging to a cellular radiocommunication system starting from an identifier of a current geographic cell in which the said mobile station is located, the said computer program comprising portions / means / program code instructions recorded on a medium that can be used in a computer, comprising:
- programming means that can be read by a computer to perform the calculation step for a modelled geographic representation (5) of the current cell;
- programming means that can be read by a computer to perform the calculation step to determine the barycentre (6) of this said modelled geographic representation of the current cell;
- programming means that can be read by a computer to perform the calculation step to determine an uncertainty area (7) with a predetermined geometric shape centred on the said barycentre and the area of which is approximately equal to the area of the said modelled geographic representation of the current cell; the position of the mobile station being defined by the barycentre, with an uncertainty equal to the uncertainty area.

## Patentansprüche

1. Verfahren zur Berechnung der Position einer mobilen Station (MS), die einem Mobilfunkkommunikationssystem angehört, auf Basis eines Identifikators einer aktuellen geografischen Zelle, in der sich die mobile Station befindet,
**dadurch gekennzeichnet, dass** es die folgenden Schritte umfasst:
- Berechnung einer modellierten geografischen Darstellung (5) der aktuellen Zelle;
- Berechnung des Baryzentrums (6) der modellierten geografischen Darstellung der aktuellen Zelle;
- Berechnung einer Unsicherheitszone (7), die eine vorbestimmte geometrische Form aufweist und auf dem Baryzentrum zentriert ist und deren Fläche im Wesentlichen gleich der Fläche der modellierten geografischen Darstellung der aktuellen Zelle ist;
und dass die Position der mobilen Station durch das Baryzentrum mit einer Unsicherheit gleich der Unsicherheitszone definiert ist.

2. Verfahren nach Anspruch 1, **dadurch gekennzeichnet, dass** die Berechnung einer modellierten geografischen Darstellung (5) der aktuellen Zelle darin besteht, mit einem Funkvorhersagewerkzeug eine Gesamtheit von Punkten zu berechnen, an denen die aktuelle Zelle ein größeres Funkfrequenznetz als die anderen Zellen aufweist.

3. Verfahren nach einem der Ansprüche 1 und 2, **dadurch gekennzeichnet, dass** die geometrische Form der Gruppen angehört, umfassend:
- Scheiben;
- Vielecke, vorzugsweise Sechsecke, Quadrate und gleichseitige Dreiecke.

4. Verfahren nach einem der Ansprüche 1 und 2, **dadurch gekennzeichnet, dass** die geometrische Form ein Vieleck ist und dass das Vieleck in die größte Richtung der aktuellen Zelle ausgerichtet ist.

5. Verfahren nach einem der Ansprüche 1 bis 4, **dadurch gekennzeichnet, dass** die Berechnung der Position der mobilen Station auf dynamische Weise erfolgt.

6. Verfahren nach einem der Ansprüche 1 bis 5, **dadurch gekennzeichnet, dass** es einen vorherigen Schritt der Entnahme mindestens einer Anzeigemeldung, die im Netz des Funkkommunikationssystems zirkuliert, aus dem Identifikator der aktuellen Zelle umfasst.

7. Verfahren nach Anspruch 6, **dadurch gekennzeichnet, dass** die Entnahme ausgelöst wird, wenn mindestens eine der folgenden Bedingungen erfüllt ist, wenn die mobile Station einen Ruf entsendet:
- die Nummer der mobilen Station gehört einer vorbestimmten Liste von anrufenden Nummern an;
- die von der mobilen Station angerufene Nummer gehört einer vorbestimmten Liste von angerufenen Nummern an;
- die aktuelle Zelle gehört einer vorbestimmten Liste von Zellen an.

8. Verfahren nach einem der Ansprüche 1 bis 7, **dadurch gekennzeichnet, dass** die Position der mobilen Station und die zugehörige Unsicherheit eine Lokalisierungsdatenbasis (2) versorgen, um die Bereitstellung von mindestens einem geoabhängigen Dienst zu ermöglichen.

9. Vorrichtung (1) zur Berechnung der Position einer mobilen Station, die einem Mobilfunkkommunikationssystem angehört, auf Basis eines Identifikators einer aktuellen geografischen Zelle, in der sich die mobile Station befindet,
**dadurch gekennzeichnet, dass** sie umfasst:
- Mittel zur Berechnung einer modellierten geografischen Darstellung (5) der aktuellen Zelle;
- Mittel zur Berechnung des Baryzentrums (6) der modellierten geografischen Darstellung der aktuellen Zelle;
- Mittel zur Berechnung einer Unsicherheitszone (7), die eine vorbestimmte geometrische Form aufweist und auf dem Baryzentrum zentriert ist und deren Fläche im Wesentlichen gleich der Fläche der modellierten geografischen Darstellung der aktuellen Zelle ist;
wobei die Position der mobilen Station durch das Baryzentrum mit einer Unsicherheit gleich der Unsicherheitszone definiert ist.

10. Vorrichtung nach Anspruch 9, **dadurch gekennzeichnet, dass** sie in ein Funkfrequenzplanungswerkzeug (4) der geografischen Zellen des Mobilfunkkommunikationssystems integriert ist.

11. Computerprogramm, umfassend Abschnitte/Mittel/Instruktionen eines Programmcodes für die Ausführung der Schritte des Verfahrens nach einem der Ansprüche 1 bis 8, wenn das Programm auf einem Computer ausgeführt wird.

12. Computerprogrammprodukt, das für die Berechnung der Position einer mobilen Station (MS), die einem Mobilfunkkommunikationssystem angehört, auf Basis eines Identifikators einer aktuellen geografischen Zelle, in der sich die mobile Station befindet, bestimmt ist, wobei das Computerprogrammprodukt Abschnitte/Mittel/Instruktionen eines Programmcodes, aufgezeichnet auf einem in einem Computer verwendbaren Träger, aufweist, umfassend:
- vom Computer lesbare Programmiermittel, um den Schritt der Berechnung einer modellierten geografischen Darstellung (5) der aktuellen Zelle auszuführen,
- vom Computer lesbare Programmiermittel, um den Schritt der Berechnung des Baryzentrum (6) der modellierten geografischen Darstellung der aktuellen Zelle auszuführen,
- vom Computer lesbare Programmiermittel, um den Schritt der Berechnung der Unsicherheitszone (7), die eine vorbestimmte geometrische Form aufweist, auf das Baryzentrum zentriert ist, und deren Fläche im Wesentlichen gleich der Fläche der modellierten geografischen Darstellung der aktuellen Zelle ist, auszuführen;
wobei die Position der mobilen Station durch das Baryzentrum mit einer Unsicherheit gleich der Unsicherheitszone definiert ist.
